Europäisches Patentamt

European Patent Office

Office européen des brevets

(11) Numéro de publication: **0 194 947**
**A2**

## (12) DEMANDE DE BREVET EUROPEEN

(21) Numéro de dépôt: 86400534.3

(22) Date de dépôt: 13.03.86

(51) Int. Cl.⁴: **G02F 1/133** , H05B 33/00

(30) Priorité: 14.03.85 FR 8503755

(43) Date de publication de la demande:
**17.09.86 Bulletin 86/38**

(84) Etats contractants désignés:
**CH DE FR GB IT LI NL**

(71) Demandeur: **COMMISSARIAT A L'ENERGIE ATOMIQUE Etablissement de Caractère Scientifique Technique et Industriel 31/33, rue de la Fédération F-75015 Paris(FR)**

(72) Inventeur: **Poujois, Robert Les Jaillets F-38650 Sinard(FR)**

(74) Mandataire: **Mongrédien, André et al c/o BREVATOME 25, rue de Ponthieu F-75008 Paris(FR)**

(54) Dispositif d'affichage matriciel point par point.

(57) L'invention concerne un dispositif d'affichage matriciel point par point comprenant une première et une seconde parois (3,1) isolantes en regard, des électrodes de commande (5) réparties en matrice au-dessus de la première paroi (3), une couche continue (7) d'un matériau résistif réalisant un raccordement entre les différentes électrodes (5), chaque électrode (5) étant commandée par un circuit de commande (15) pouvant être disposé au-dessus de la première paroi (3) une couche protectrice (4) isolante étant alors intercalée entre les circuits de commande (15) et la couche résistive (7), chaque circuit de commande comportant notamment un circuit adaptateur d'impédance (21) et un fusible (16), une contre-électrode (9) disposée en regard des électrodes de commande (5) sur la seconde paroi (1) et un matériau d'affichage (11) intercalé entre les électrodes de commande (5) et la contre-électrode (9).

Application aux dispositifs d'affichage à cristaux liquides.

FIG. 1

# DISPOSITIF D'AFFICHAGE MATRICIEL POINT PAR POINT

La présente invention a pour objet un dispositif d'affichage matriciel point par point.

L'invention s'applique en particulier en optoélectronique et principalement dans la commande de cellules d'affichage matriciel comprenant un matériau d'affichage électro-optique tel qu'un film de cristal liquide ou un film électroluminescent, utilisées par exemple comme convertisseurs d'informations électriques en informations optiques, pour le traitement des images optiques en temps réel, et pour l'affichage analogique.

De façon plus précise, l'invention concerne un dispositif d'affichage matriciel point par point formant de façon connue une cellule d'affichage comportant deux parois isolantes en regard l'une de l'autre, entre lesquelles un matériau d'affichage électro-optique possédant des propriétés optiques est intercalé.

Sur la face interne de l'une des parois est répartie sous forme d'une matrice p x q une pluralité d'électrodes de commande, chacune des électrodes de la matrice définissant un point image. Sur la face interne de l'autre paroi, en regard de ces électrodes, une contre-électrode est déposée sous la forme d'une couche continue d'un matériau conducteur. Dans le cas particulier où le matériau d'affichage est un film de cristal liquide, la contre-électrode est portée à un potentiel dont la valeur est inversée périodiquement pour éviter de détériorer le cristal liquide.

Des circuits de commande sont prévus pour commander les électrodes de commande à partir de signaux d'excitation appliqués à des lignes et des colonnes d'adressage. A chaque électrode de la matrice p x q correspond un circuit de commande comprenant un interrupteur tel qu'un transistor, relié à une ligne et à une colonne d'adressage et une mémoire tel qu'un condensateur, reliée d'une part à l'interrupteur et à l'électrode correspondante et d'autre part à une masse.

Ainsi, le circuit de commande d'une électrode de commande $x_i y_j$ où i et j sont des entiers tels que $1 \leqslant i \leqslant p$ et $1 \leqslant j \leqslant q$ transmet à cette électrode les signaux d'excitation appliqués à la ligne d'adessage $x_i$ et à la colonne d'adressage $y_j$. Les signaux d'excitation sont électriques, notamment dans le cas particulier du cristal liquide, que l'on prendra comme exemple dans le reste du texte pour plus de clarté.

Ainsi l'application de tensions électriques sur les lignes et colonnes d'adressage et sur la contre-électrode entraîne l'apparition d'un champ électrique au sein du cristal liquide qui provoque une orientation collective des molécules du cristal liquide. On combine ainsi, de façon connue, deux excitations électriques : l'une ayant pour effet l'affichage d'un état optique déterminé tel qu'un état diffusant et l'autre ayant un effet inhibiteur.

En utilisant l'orientation sélective des molécules et l'excitation ponctuelle du cristal liquide, on fait apparaître une image sur l'ensemble de la cellule en la définissant point par point.

Dans de tels dispositifs d'affichage matriciel point par point, comprenant des circuits de commande constitués de composants électroniques tels que des transistors MOS (Metal Oxyde Semi-conductor) sur silicium massif ou des transistors en couche mince, des défauts dans le circuit de commande provoquent des courts-circuits entre les lignes, les colonnes et/ou les lignes et les colonnes ainsi que des coupures dans les lignes ou dans les colonnes.

Ces défauts se traduisent par des points images noirs ou blancs ou encore des lignes ou des colonnes de points noires ou blanches et rendent le dispositif d'affichage inutilisable.

Ces défauts doivent donc être réparés en fin de fabrication du dispositif d'affichage afin que celui-ci soit utilisable.

Pour améliorer le rendement de fabrication de ces dispositifs d'affichage matriciel point par point, plusieurs solutions ont été envisagées.

Tout d'abord, on a diminué la taille des points images et augmenté leur nombre afin de rendre les points mauvais peu ou pas visibles, compte tenu du pouvoir de séparation de l'oeil. Mais cette solution a pour inconvénient d'augmenter la complexité du dispositif et de le rendre plus coûteux.

Une deuxième solution consiste à introduire une redondance, c'est-à-dire à multiplier de façon plus ou moins importante le nombre de lignes et de colonnes, sans augmenter le nombre de points images. Un tel dispositif est décrit dans la demande de brevet français n°8317466 déposée le 3 novembre 1983. Le rendement de fabrication de ce dispositif est amélioré, mais il faut tester tous les éléments de la matrice, déconnecter les éléments mauvais et reconnecter les éléments bons. Ces opérations ont donc pour inconvénient d'être longues et coûteuses.

Une autre solution consiste à introduire des résistances de protection en série avec des transistors d'adressage dans le circuit de commande pour éviter les courts-circuits entre ligne et colonne. Un tel dispositif est décrit dans la demande de brevet français n°8317403 du 2 novembre 1983. Cette solution présente l'inconvénient de n'éliminer que les défauts provoquant des courts-circuits entre ligne et colonne.

Une dernière solution consiste à commander les lignes et les colonnes à leurs deux extrémités, cette solution a pour inconvénient de n'éliminer que les coupures de lignes ou de colonnes qui ne sont pas une cause prépondérante de mauvais fonctionnement.

La présente invention a pour but de remédier à ces inconvénients en réalisant un dispositif d'affichage matriciel point par point, améliorant le rendement de fabrication de ces dispositifs et la définition optique de l'affichage, notamment des cellules à cristaux liquides.

L'invention a pour objet un dispositif d'affichage matriciel point par point, comprenant :

-une première et une seconde parois isolantes en regard,

-des électrodes de commande définissant des points images répartis en matrice au-dessus de la première paroi, chaque électrode associée à un point image étant commandée par un circuit de commande délivrant sur celle-ci des signaux d'excitation, chaque circuit de commande comprenant un interrupteur connecté à une ligne d'adressage et à une colonne d'adressage et une mémoire reliée d'une part à l'interrupteur et à l'électrode de commande correspondante et d'autre part à la masse,

-une contre-électrode disposée en regard des électrodes de commande, sous forme d'une couche continue d'un matériau conducteur, sur la seconde paroi, et

-un matériau d'affichage électro-optique intercalé entre les électrodes de commande et la contre-électrode, ce matériau possédant des propriétés optiques qui sont modifiées en fonction des signaux d'excitation délivrés sur les électrodes de commande,

caractérisé en ce qu'il comprend en outre une couche continue d'un matériau résistif disposée au-dessus de la première paroi réalisant un raccordement entre les différentes électrodes de commande et en ce que chaque circuit de commande comprend un circuit adaptateur d'impédance intercalé entre la mémoire du circuit de commande d'une part et l'électrode de commande correspondante, par l'intermédiaire d'un fusible d'autre part.

L'interrupteur et la mémoire de chaque circuit de commande sont constitués généralement, respectivement par un transistor MOS et par un condensateur.

D'autre part, l'impédance d'entrée de chaque circuit adaptateur d'impédance est grande et supérieure à la résistance de charge de l'électrode de commande correspondante reliée à la couche résistive et son impédance de sortie est faible et inférieure à la résistance de charge de cette électrode. De plus, le gain en tension du circuit adaptateur d'impédance est de l'ordre de l'unité et la consommation électrique de ce circuit est de préférence faible.

Du fait du raccordement des électrodes de commande par une couche résistive, les points images définis par ces électrodes ont des dimensions supérieures à celles des électrodes et sont accolés les uns aux autres.

L'association d'une couche résistive avec des circuits de commande comprenant respectivement un circuit adaptateur d'impédance et un fusible, permet de réparer les points images défectueux du dispositif d'affichage.

La couche résistive permet de raccorder électriquement les différentes électrodes de commande. Aussi, lorsque des circuits de commande sont défectueux, ceux-ci sont isolés des électrodes de commande correspondantes par l'intermédiaire des fusibles ; la couche résistive permet alors de relier électriquement les électrodes de commande, isolées de leurs circuits de commande, aux autres électrodes de commande, ce qui permet d'avoir une image continue.

Cependant, la résistance de charge R des électrodes de commande reliées à la couche résistive est inférieure à la résistance de charge d'électrodes de commande non raccordées à une couche résistive. Aussi, on associe à chaque électrode de commande, un circuit de commande comportant un circuit adaptateur d'impédance pour éviter le déchargement dans la couche résistive, par l'électrode de commande, de l'information électrique contenue dans la mémoire correspondante en un temps $T = RC$ inférieur au temps pendant lequel l'information électrique doit être conservée au point image correspondant ; R représente la résistance de charge de l'électrode de commande reliée à la couche résistive et C la capacité de la mémoire correspondante. En effet, la résistance de charge d'une électrode de commande reliée à la couche résistive est généralement de l'ordre de 20 M$\Omega$ et la capacité maximale C de la mémoire associée à une électrode de commande est de l'ordre de $4.10^{-12}$F, compte tenu de la place occupée par l'électrode de commande. Aussi, le temps de décharge T de l'information électrique, sans circuit adaptateur d'impédance est de l'ordre de $T = 20.10^6 \times 4.10^{-12} = 80.10^{-6}$ S, alors que l'information doit être affichée au moins pendant $50.10^{-3}$ S.

Selon un mode préféré de réalisation du dispositif d'affichage matriciel point par point de l'invention, le matériau d'affichage est un film de cristal liquide.

Selon un autre mode préféré de réalisation du dispositif d'affichage matriciel point par point de l'invention, chaque circuit adaptateur d'impédance d'un circuit de commande comprend un premier et un deuxième transistors et une source de tension, le premier transistor étant connecté à la mémoire dudit circuit de commande, à la source de tension et par une même borne à l'électrode de commande correspondante par l'intermédiaire du fusible dudit circuit de commande et au deuxième transistor, le deuxième transistor étant connecté en outre à la masse et à la source de tension.

Selon un autre mode préféré de réalisation du dispositif d'affichage matriciel point par point de l'invention, chaque fusible d'un circuit de commande est un transistor en couche mince relié à une source de tension, au circuit adaptateur d'impédance dudit circuit de commande et l'électrode de commande correspondante.

En effet, les transistors en couche mince ont la particularité de devenir isolants dès que l'on provoque une fusion entre la grille et le canal du transistor. Cette fusion est obtenue par exemple à l'aide d'un faisceau laser.

Selon une variante de réalisation du dispositif d'affichage matriciel point par point de l'invention chaque fusible d'un circuit de commande est le conducteur électrique reliant le circuit adaptateur d'impédance dudit circuit de commande à l'électrode de commande correspondante.

Ce conducteur électrique est par exemple en aluminium ou en silicium polycristallin et il est de préférence aminci pour être plus facilement coupé par exemple par un faisceau laser.

De façon avantageuse, la source de tension du circuit adaptateur d'impédance et/ou du fusible de chaque circuit de commande est constituée par la ligne d'adressage correspondante. En effet, cette ligne d'adressage est presque tout le temps portée à un potentiel, sauf pendant le temps de charge de la mémoire correspondante, c'est-à-dire pendant environ 10$\mu$s.

Dans le cas où les circuits de commande sont disposés au-dessus de la première paroi une couche protectrice isolante est intercalée entre ces circuits de commande et la couche résistive, cette couche protectrice étant traversée par les conducteurs des circuits de commande reliant ces circuits aux électrodes de commande correspondantes.

Les électrodes de commande peuvent être aussi bien dans la couche résistive qu'au-dessus ou au-dessous de cette couche.

D'autres caractéristiques et avantages de l'invention ressortiront mieux de la description qui va suivre, donnée à titre purement illustratif et non limitatif, en référence aux figures 1 à 3 annexées dans lesquelles :

-la figure 1 représente, schématiquement en vue écorchée, un dispositif d'affichage matriciel point par point conforme à l'invention,

-les figures 2a et 2b représentent, schématiquement des exemples de circuits de commande conformes à l'invention d'une électrode de commande du dispositif, et

-la figure 3 représente, schématiquement, les potentiels de différentes électrodes de commande dans un dispositif d'affichage selon l'invention.

La description ci-après se réfère à un dispositif d'affichage dans lequel les circuits de commande sont disposés au-dessus de l'une des parois du dispositif. Aussi, dans la description ce dispositif sera appelé indifféremment cellule ou dispositif d'affichage. Bien entendu, ceci n'est qu'un exemple de réalisation, les circuits de commande pouvant ne pas être disposés au-dessus de l'une des parois du dispositif.

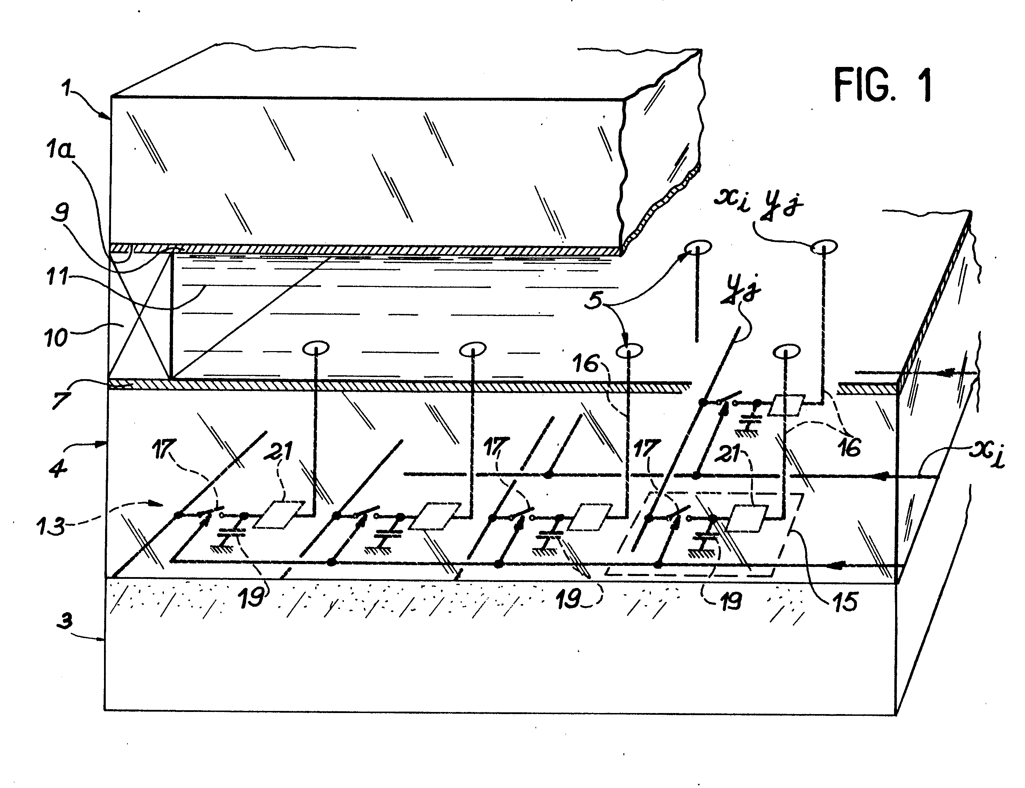

La figure 1 représente un dispositif d'affichage matriciel point par point comprenant deux parois 1, 3 en regard l'une de l'autre, constituées d'un substrat isolant.

Une couche continue 7 d'un matériau résistif est disposée au-dessus de la paroi 3 au-dessus de laquelle sont réparties en matrice p x q, des électrodes de commande 5, chaque électrode définissant un point image de la cellule d'affichage. Cette couche 7 réalise un raccordement entre les électrodes 5, permettant d'éviter toute discontinuité de potentiel sur l'ensemble de la cellule d'affichage. Comme on l'a vu précédemment, les points images d'un dispositif d'affichage conforme à l'invention ont des dimensions supérieures à celles des électrodes de commande correspondantes et sont accolés les uns aux autres. Sur l'autre paroi 1, est disposée une couche continue 9 d'un matériau conducteur, en regard de la couche résistive 7. Cette couche 9 constitue une contre-électrode.

Les deux parois 1 et 3, au-dessus desquelles sont disposées en regard les couches 7 et 9, sont maintenues écartées par un joint d'étanchéité 10 déposé tout autour de leurs bords, délimitant ainsi un espace fermé dans lequel est introduit un matériau d'affichage 11 ayant des propriétés optiques modifiables, tel qu'un film de cristal liquide.

La description ci-après se réfère à un film de cristal liquide, mais bien entendu, comme illustré précédemment, tout autre matériau d'affichage peut être envisagé sans pour autant sortir du cadre de l'invention.

Un ensemble 13 de circuits de commande constitués chacun de composants électroniques, est disposé au-dessus de la paroi 3, celle-ci étant formée soit par un semiconducteur tel que du silicium, soit par un isolant tel que de la silice. Une couche protectrice isolante 4 généralement transparente est intercalée entre les circuits de commande et la couche résistive 7. Chaque circuit de commande 15 est relié d'une part, à une électrode de commande $x_i y_j$ par l'intermédiaire d'un conducteur 16 traversant la couche protectrice 4, et d'autre part à une ligne d'adressage $x_i$ et à une colonne d'adressage $y_j$, où i et j sont des entiers tels que $1 \leqslant i \leqslant p$ et $1 \leqslant j \leqslant q$.

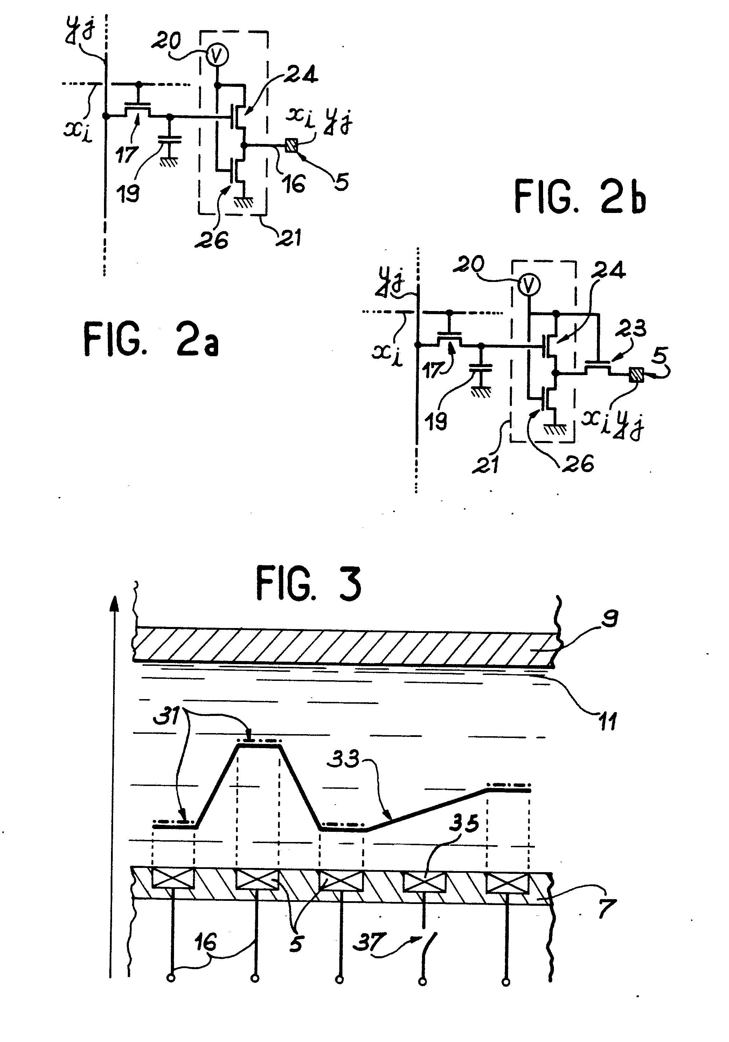

Chaque circuit de commande 15 comprend un interrupteur 17 tel qu'un transistor d'adressage, un condensateur 19 jouant le rôle de mémoire, un circuit adaptateur d'impédance 21 et un fusible. Ce fusible est constitué soit par le conducteur 16 (figures 1, 2a, 3) notamment lorsque le circuit de commande est réalisé sur du silicium massif soit par un transistor en couche mince 23 (figure 2b) notamment lorsque le circuit de commande est réalisé sur du silicium amorphe.

L'interrupteur 17 commandé par la ligne d'adressage $x_i$ assure la connexion entre la colonne d'adressage $y_j$ et la mémoire 19 du circuit de commande de l'électrode de commande $x_i y_j$. La mémoire 19 stocke le signal d'excitation à appliquer à l'électrode de commande. Cette mémoire 19 est reliée d'une part à l'interrupteur 17 et d'autre part à la masse. Le circuit adaptateur d'impédance 21 est placé entre la mémoire 19 et l'électrode de commande. Cet adaptateur 21 fournit en permanence un courant de l'ordre du $\mu A$ pour imposer un certain potentiel sur la couche résistive 7.

Pour limiter la consommation d'un tel dispositif d'affichage matriciel, on utilise une couche 7 de grande résistivité, de l'ordre de quelques dizaines de $M\Omega$ par $cm^2$, et des adaptateurs d'impédance 21 consommant un courant de l'ordre du $\mu A$. Les circuits adaptateurs 21 utilisent généralement des transistors MOS en silicium massif ou en couche mince de silicium amorphe.

Pour une cellule d'affichage fonctionnant par transmission, on utilise des parois 1, 3 transparentes, par exemple en verre et des couches 7 et 9 également transparentes pouvant être réalisées en un oxyde conducteur tel que l'oxyde d'indium ou d'étain. Dans ce cas, les circuits de commande 15 peuvent être réalisés à partir de transistors en couche mince sur la paroi 3.

Pour une cellule d'affichage fonctionnant par réflexion, on utilise une paroi 1 et une couche 9 transparente. La couche 7 est soit réfléchissante, soit transparente, un métal réfléchissant devant être disposé par exemple dans ce dernier cas sous cette couche. En mode réflectif, la paroi 3 peut donc être en silicium massif, les circuits de commande 15 étant alors réalisés sur silicium massif.

Avec un dispositif conforme à l'invention, lorsque l'on a des points images défectueux, on isole les électrodes 5 correspondant à ces points défectueux, de leurs circuits de commande 15. La couche résistive 7 assure alors la jonction en tension entre les électrodes non défectueuses ; on n'a pas de ce fait de discontinuité d'affichage sur l'ensemble de la cellule. On peut ainsi réparer des points isolés ou des lignes ou des colonnes de points défectueux.

L'isolement des électrodes 5 correspondant aux points images défectueux s'effectue sur la cellule d'affichage terminée et en fonctionnement normal. Ces points défectueux sont repérés facilement par leurs teintes anormales lors de la visualisation par exemple de lignes blanches et noires alternées ou simplement de teintes uniformes.

Chaque électrode 5 correspondant à un point défectueux est isolée de son circuit de commande par exemple en coupant le conducteur 16 lorsque celui-ci constitue le fusible du circuit de commande, ou bien en rendant isolant le transistor en couche mince 23 lorsque celui-ci constitue le fusible de ce circuit. Pour couper le conducteur 16 ou pour rendre isolant le transistor 23, on utilise par exemple un faisceau laser focalisé par des techniques connues.

Dans le cas d'une cellule d'affichage fonctionnant par réflexion, le faisceau laser est envoyé sur la paroi 1 transparente, traverse le cristal liquide 11, pour atteindre le conducteur 16 ou le transistor 23. Cette opération se fait sans dommage pour le cristal liquide 11 si l'énergie du faisceau laser est faible. Il faut donc que le faisceau soit bien focalisé et que le matériau constituant le conducteur 16, notamment lorsque celui-ci constitue le fusible, soit facilement volatilisable. On utilise pour cela comme conducteur 16 une ligne conductrice amincie par exemple en aluminium ou en silicium polycristallin.

Dans le cas d'une cellule d'affichage fonctionnant par transmision, la paroi 3 étant transparente, le faisceau laser peut être envoyé directement sur la face arrière du dispositif d'affichage matriciel sans avoir à traverser le cristal liquide.

La figure 2a représente un exemple de circuit de commande 15 d'une électrode de commande $x_i y_j$ utilisant comme fusible le conducteur 16. On voit un transistor d'adressage 17 commandé par la ligne d'adressage $x_i$ et assurant la connexion de la colonne d'adressage $y_j$ avec

une mémoire 19. Ce transistor, jouant le rôle d'interrupteur, transmet à la mémoire 19 la tension analogique de commande provenant de la colonne $y_j$, la mémorisation étant commandée et connectée par l'excitation de la ligne $x_i$.

Cette mémoire 19 est reliée d'une part au transistor d'adressage 17 et au circuit adaptateur d'impédance 21 et d'autre part à une masse. Le circuit adaptateur d'impédance représenté comprend deux transistors 24, 26 et une source d'alimentation en tension 20. Ces transistors sont des transistors MOS du type à canal N lorsque la source de tension est positive ou du type à canal P lorsque la source de tension est négative. La grille du tansistor 24 est reliée à la mémoire 19 et les deux autres bornes - (source et drain) de ce transistor sont reliées de façon distincte à la source de tension et à la fois à une borne du transistor 26 et à l'électrode de commande $x_i y_j$ par l'intermédiaire du conducteur 16. La grille du transistor 26 est reliée à la source de tension 20 et la troisième borne de ce transistor est reliée à la masse.

Ce circuit 21 permet d'adapter la grande impédance de sortie de la mémoire 19 à l'impédance de plus basse valeur de l'électrode de commande correspondante reliée à la couche 7. Ce circuit a une impédance d'entrée de l'ordre de $10^{12}\Omega$.

Les transistors utilisés peuvent être des transistors MOS réalisés sur du silicium massif notamment dans le cas où la paroi 3 est en silicium massif ou des transistors en couche mince notamment dans le cas où la paroi 3 est isolante.

Lorsque le point image correspondant à l'électrode de commande $x_i y_j$ est défectueux, on coupe le conducteur 16 par exemple par un faisceau laser pour isoler le circuit de commande de l'électrode de commande $x_i y_i$.

La figure 2b représente une variante de réalisation d'un circuit de commande 15 d'une électrode de commande $x_i y_j$ utilisant comme fusible un transistor 23 en couche mince. Cet exemple de réalisation s'applique plus particulièrement à un dispositif d'affichage comprenant une paroi 3 isolante, autrement dit comprenant un circuit de commande utilisant des transistors en couche mince.

L'interrupteur, la mémoire et le circuit adaptateur d'impédance de ce circuit de commande sont les mêmes que ceux décrit précédemment.

Par ailleurs, le transistor 23 est relié par une de ses bornes aux transistors 24 et 26 du circuit 21, par une autre borne à l'électrode de commande $x_i$ $y_j$ et par sa grille à une source de tension. Cette source de tension peut être aussi bien la même source de tension 20 que celle du circuit 21, comme représenté figure 2b, qu'une autre source de tension.

Lorsque le point image correspondant à l'électrode de commande $x_i y_j$ est défectueux le transistor 23 est utilisé comme point d'impact par exemple d'un faisceau laser pour isoler le circuit de commande 15 de l'électrode correspondant au point défectueux. En effet, un tel transistor a la propriété de devenir isolant entre sa source et son drain, lorsque la grille est en court-circuit avec le silicium amorphe constituant la couche mince. Ce court-circuit peut être obtenu, par une fusion locale de la grille, avec perçage de l'isolant par l'intermédiaire d'un faisceau laser de faible énergie.

En choisissant de façon convenable les transistors 23, 24, 26 et 17 c'est-à-dire en choisissant des transistors 23, 24 et 26 de type à canal N et un transistor 17 de type à canal P, ou bien l'inverse, la ligne d'adressage $x_i$ peut servir de source de tension au circuit adaptateur d'impédance et/ou au transistor 23 (figure 2a-2b). En effet, comme on l'a vu précédemment, cette ligne d'adressage est presque tout le temps portée à un potentiel sauf pendant le temps de charge de la mémoire 19 c'est-à-dire pendant environ 10 $\mu$s.

La figure 3 représente à titre d'exemple les potentiels de différentes électrodes de commande dans un dispositif d'affichage conforme à l'invention comportant une seule ligne d'électrodes, entre la couche de grande résistivité 7 raccordant les électrodes de commande 5 et la contre-électrode 9. Sur cette figure, on a choisi de représenter à titre d'exemple les conducteurs 16 comme fusibles. On aurait pu tout aussi bien représenter les transistors 23 comme fusibles.

La courbe 31 discontinue en traits mixtes représente les différents potentiels des électrodes de commande 5 que l'on aurait obtenus sans la couche résistive 7 conforme à l'invention, avec notamment un point image défectueux correspondant à une électrode 35. Un point image défectueux se traduit dans ce cas par un potentiel erroné de l'électrode correspondante, comme par exemple un potentiel nul (voir figure 3). Par ailleurs, les potentiels obtenus sans couche résistive 7 sont discontinus.

Avec un dispositif conforme à l'invention, c'est-à-dire avec une couche résistive 7 raccordant les électrodes 5, on a une continuité des potentiels sur toute la surface de l'afficheur, représentés par la courbe 33 en trait plein. En cas de défaut d'un point image, grâce à cette couche résistive 7, on garde la continuité des potentiels par lissage des différents niveaux de potentiel entre deux électrodes de commande correspondant à des points images non défectueux, l'électrode 35 correspondant au point défectueux ayant été isolé de son circuit de commande par exemple par coupure 37 du conducteur 16.

Dans le cas d'un dispositif d'affichage matriciel de plusieurs lignes d'électrodes de commande, la continuité des potentiels est obtenue par un lissage entre les différents niveaux de potentiel des électrodes de commande entourant l'électrode correspondant à un point image défectueux.

De cette façon, la visualisation de l'image affichée avec un dispositif d'affiche comportant une couche résistive et un circuit de commande conforme à l'invention, est plus agréable pour une même définition.

En plus d'une qualité accrue de la visualisation, le dispositif conforme à l'invention présente d'autres avantages, notamment la réparation des défauts s'effectue sur le dispositif d'affichage terminé et en fonctionnement normal, contrairement aux dispositifs de l'art antérieur où la réparation des défauts s'effectue avant la mise en place du matériau d'affichage 11 entre les parois de la cellule tel qu'un film de cristal liquide.

Le circuit adaptateur 21 représenté figures 2a et 2b n'est qu'un exemple de réalisation d'un circuit adaptateur d'impédance. Il existe de nombreux circuits pouvant jouer le même rôle.

**Revendications**

1. Dispositif d'affichage matriciel point par point comprenant :

-une première et une seconde parois (3, 1) isolantes en regard,

-des électrodes de commande (5) définissant des points images répartis en matrice au-dessus de la première paroi - (3), chaque électrode (5) associée à un point image étant commandée par un circuit de commande (15) délivrant sur celle-ci des signaux d'excitation, chaque circuit de commande comprenant un interrupteur (17) connecté à une ligne d'adressage ($x_i$) et à une colonne d'adressage ($y_j$) et une mémoire (19) reliée d'une part à l'interrupteur (17) et à l'électrode de commande correspondante, et d'autre part à la masse,

-une contre-électrode (9) disposée en regard des électrodes de commande (5), sous forme d'une couche continue d'un matériau conducteur sur la seconde paroi (1),

-un matériau d'affichage électro-optique (11) intercalé entre les électrodes de commande (5) et la contre-électrode (9), ce matériau (11) possédant des propriétés optiques qui sont modifiées en fonction des signaux d'excitation délivrés sur les électrodes de commande (5),

caractérisé en ce qu'il comprend en outre une couche continue (7) d'un matériau résistif disposée au-dessus de la première paroi (3), réalisant un raccordement entre les différentes électrodes de commande (5) et en ce que chaque circuit de commande comprend un circuit adaptateur d'impédance (21) intercalé entre la mémoire (19) du circuit de commande d'une part et l'électrode de commande correspondante, par l'intermédiaire d'un fusible (16, 23), d'autre part.

2. Dispositif d'affichage matriciel point par point selon la revendication 1, caractérisé en ce que le matériau d'affichage (11) est un film de cristal liquide.

3. Dispositif d'affichage matriciel point par point selon l'une quelconque des revendications 1 et 2, caractérisé en ce que chaque circuit adaptateur d'impédance (21) d'un circuit de commande (15) comprend un premier et un deuxième transistors (24, 26) et une source de tension ($x_i$, 20), le premier transistor (24) étant connecté à la mémoire (19) dudit circuit de commande, à la source de tension et par une même borne à l'électrode de commande (5) correspondante par l'intermédiaire du fusible (16, 23) dudit circuit de commande et au deuxième transistor (26), le deuxième transistor étant connecté en outre à la masse et à la source de tension.

4. Dispositif d'affichage matriciel point par point selon l'une quelconque des revendications 1 à 3, caractérisé en ce que chaque fusible (23) d'un circuit de commande est un transistor en couche mince relié à une source de tension - ($x_i$, 20), au circuit adaptateur d'impédance (21) dudit circuit de commande (15) et à l'électrode de commande (5) correspondante.

5. Dispositif d'affichage matriciel point par point selon l'une quelconque des revendications 1 à 3, caractérisé en ce que chaque fusible (16) du circuit de commande est le conducteur électrique reliant le circuit adaptateur d'impédance (21) dudit circuit de commande (15) à l'électrode de commande (5) correspondante.

6. Dispositif d'affichage matriciel point par point selon l'une quelconque des revendications 3 et 4, caractérisé en ce que la source de tension du circuit adaptateur d'impédance (21) et/ou du fusible (23) de chaque circuit de commande est constituée par la ligne d'adressage ($x_i$) correspondante.

7. Dispositif d'affichage matriciel point par point selon l'une quelconque des revendications 1 à 6, caractérisé en ce que les circuits de commande (15) étant disposés au-dessus de la première paroi (3), une couche protectrice (4) isolante est intercalée entre ces circuits de commande et la couche résistive (7), cette couche protectrice (4) étant traversée par les conducteurs (16) des circuits de commande reliant ces circuits aux électrodes de commande (5) correspondantes.

FIG. 1

0 194 947

0 194 947

FIG. 2a

FIG. 2b

FIG. 3